# EUROPÄISCHE PATENTSCHRIFT

(11) **EP 0 377 131 B1**
(45) Veröffentlichungstag und Bekanntmachung des Hinweises auf die Patenterteilung: **21.04.1993**
(21) Anmeldenummer: 89122565.8
(22) Anmeldetag: 07.12.1989
(51) Int. Cl.: C02F 1/46, C02F 1/76, C02F 1/78

(54) **Verfahren und Vorrichtung zum Desinfizieren von Wasser**
Method and apparatus for disinfecting water
Procédé et dispositif pour désinfecter l'eau

(30) Priorität: 10.12.1988 DE 3841672
(43) Veröffentlichungstag der Anmeldung: 11.07.1990
(73) Patentinhaber: Pauser, Knut, Dipl.-Ing., D-73527 Schwäbisch Gmünd (DE)
(72) Erfinder: Pauser, Knut, Dipl.-Ing., D-73527 Schwäbisch Gmünd (DE)
(74) Vertreter: Hoeger, Stellrecht & Partner

(56) Entgegenhaltungen:
- DE-A- 2 738 484
- DE-B- 1 262 168
- GB-A- 1 294 357
- GB-A- 2 192 408
- US-A- 4 500 404
- US-A- 4 599 159

## Beschreibung

Die Erfindung betrifft ein Verfahren zum Desinfizieren von Wasser, insbesondere von aus Schwimmbecken stammendem Wasser, wobei das zum Desinfizieren benötigte Agens bei Bedarf in einer Elektrolysevorrichtung mit einem Anoden- und einem Kathodenraum gewonnen und dem zu behandelnden Wasser beigemischt wird und wobei der Elektrolysevorrichtung bei Bedarf frischer Elektrolyt zugeführt wird, während der verbrauchte Elektrolyt der Elektrolysevorrichtung entnommen und in den Abwasserkanal eingeleitet wird.

Bei den bisher bekannten Verfahren wird der verbrauchte Elektrolyt des Anodenraums (Anolyt) in den Kathodenraum und von dort schließlich in den Abwasserkanal geleitet. Diese Flüssigkeit weist im allgemeinen einen basischen pH-Wert auf.

Da der verbrauchte Anolyt stets Reste an elektrolytisch erzeugten Desinfektionsmitteln enthält, die in der Regel stark oxidierende Substanzen sind, wurden insbesondere bei Geräten mit größerer Leistung Überlegungen bezüglich einer geänderten Abwasserbehandlung angestellt, weil sich die Anforderungen an die in die öffentliche Kanalisation abzuleitenden Abwässer zunehmend verschärft haben. Außerdem treten bei dem Ableiten von aktivem Desinfektionsmittel unter Umständen Oxidationsreaktionen mit dem Wandungsmaterial der Abwasserrohre auf, die zu einer vorschnellen Alterung der Rohre führen.

Weiterhin treten, insbesondere bei der Verwendung von stark riechenden Desinfektionsmitteln, Geruchsprobleme auf, die nicht nur bei dem Abwasserzufluß des Desinfektionsgerätes vorkommen, sondern sich über zusätzliche Zuflüsse zum Abwasser bemerkbar machen können.

Ausgehend von diesem Stand der Technik stellt sich die vorliegende Erfindung die Aufgabe, ein Verfahren zum Desinfizieren von Wasser zu schaffen, bei dem lediglich im wesentlichen umweltverträgliche Abwässer in den Abwasserkanal abgegeben werden.

Diese Aufgabe wird bei dem eingangs beschriebenen Verfahren gemäß der Erfindung dadurch gelöst, daß dem Anoden- und Kathodenraum frischer Elektrolyt als Anolyt und Katholyt jeweils getrennt und direkt zugeführt wird, daß der verbrauchte Anolyt und der verbrauchte Katholyt dem Anoden- bzw. Kathodenraum getrennt entnommen werden, und daß der verbrauchte Anolyt vor der Einleitung in den Abwasserkanal unter Verwendung von verbrauchtem Katholyten neutralisiert wird.

Durch die getrennte Entnahme von verbrauchtem Anolyt und Katholyt stehen diese jeweils getrennt für eine weitere Verwendung und/oder Behandlung zur Verfügung.

Der verbrauchte Anolyt kann jetzt beispielsweise vor der Einleitung in den Abwasserkanal einem Reaktor zur Inaktivierung des enthaltenen desinfizierenden Agens zugeführt werden.

Insbesondere der aus der Chlor-Alkali-Elektrolyse oder der Chlor-Ozon-Elektrolyse erhaltene verbrauchte Anolyt weist einen sauren pH auf. Über das Zudosieren einer alkalischen Lösung kann man deshalb sicherstellen, daß dem Abwasserkanal nur noch im wesentlichen neutrales Abwasser ohne Desinfektionswirkung zugeführt wird.

Da der verbrauchte Katholyt einen weit im Alkalischen liegenden pHWert aufweist, genügt eine Teilmenge des Katholyten zur Neutralisierung des Anolyten. Dies ist bei dem erfindungsgemäßen Verfahren deshalb besonders einfach möglich, da die verbrauchten Elektrolyten des Kathoden- und Anodenraums getrennt aus diesen abgeführt werden.

Das Verfahren eignet sich insbesondere für die Verwendung von Chlor und/oder Ozon als desinfizierende Agentien.

Die Inaktivierung des in dem verbrauchten Anolyten enthaltenen Desinfektionsmittels oder Agens wird vorzugsweise durch Reduktion bewirkt. Alternativ wäre z.B. auch eine Filterung über ein Adsorptionsmedium denkbar.

Bei einem besonders bevorzugten Verfahren wird der verbrauchte Katholyt gemeinsam mit dem Reduktionsmittel in den Reaktor zur Inaktivierung des Desinfektionsmittels im verbrauchten Anolyten eingespeist. Dabei wird der verbrauchte Katholyt vorzugsweise als Lösungsmittel für das Reduktionsmittel verwendet.

Der pH-Wert des den Reaktor verlassenden inaktivierten Anolyten kann überwacht werden und bei Bedarf durch die Zugabe eines Reagens zur Neutralisierung vor der pH-Meßstelle der neutrale Charakter des Abwassers aus der Desinfektionsvorrichtung sichergestellt werden.

Dabei kann zur Neutralisierung ein zusätzlicher Anteil des verbrauchten Katholyten zugegeben werden, da die pH-Verhältnisse zwischen verbrauchtem Anolyt und verbrauchtem Katholyt regelmäßig so sind, daß zur Neutralisierung des Anolyten lediglich Teile des verbrauchten Katholyten verwendet werden müssen.

Das behandelte Wasser weist in der Regel einen leicht saueren pH-Wert auf, der vor allem aus der Reaktion des Desinfektionsmittels herrührt. Um ein stetiges Abfallen des Badewasser-pHs zu vermeiden, kann dieses mittels der verbrauchten, alkalischen Katholytlösung neutralisiert werden.

Beim Dauerbetrieb eines erfindungsgemäßen Verfahrens wird so der gesamte verbrauchte Katholyt für die Neutralisierung des verbrauchten Anolyten und für die Neutralisierung des behandelten Wassers verwendet. Es fallen somit nur im wesentlichen neutrale Abwässer an.

Da hierbei außerdem verfahrensimmanente Produkte verwendet werden, entfällt die zusätzliche Bereitstellung und Verbrauch von Chemikalien zur Neutralisierung der Abwässer bzw. des behandelten Wassers.

Als Reduktionsmittel für die oxidierenden Desinfektionsmittel werden vorzugsweise Sulfit und/oder Thiosulfat verwendet. Die dabei entstehenden Reaktionsprodukte sind für das Abwasser system unproblematisch, so daß insgesamt aus der Desinfektionsvorrichtung ein umweltverträgliches Abwasser abgegeben wird.

Bei der Entnahme von verbrauchtem Anolyt und verbrauchtem Katholyt aus dem Anoden- bzw. Kathodenraum werden vorzugsweise gegebenenfalls vorhandene Sedimente mitentfernt. Die Sedimente in dem Anoden- bzw. Kathodenraum bilden sich insbesondere beim Abschalten der Anlage und stören sonst auf die Dauer einen sicheren Betrieb der Vorrichtung.

Die verbrauchten Elektrolyten der Elektrolysevorrichtung werden vorzugsweise mittels Dosierpumpen entnommen, wobei hier beispielsweise intermittierend arbeitende Pumpen verwendet werden können, die besonders vorteilhaft bei der Entfernung der Sedimente einzusetzen sind.

Die frischen Elektrolytlösungen für Anoden- und Kathodenraum werden mit einem im wesentlichen konstanten hydrostatischen Druck in die Elektrolysevorrichtung eingefördert. Als Dosierpumpen eignen sich hierbei insbesondere sogenannte Elektrolysepumpen, deren Förderleistung proportional zu einem Elektrolysestrom ist, und bei denen in einem Gasrohr aufsteigende Gasblasen den Transport von Flüssigkeitsanteilen bewirken. Die Elektrolysepumpen werden vorzugsweise ablaufseitig angeordnet.

Bevorzugt sind bei dem angegebenen Verfahren der Anoden- und der Kathodenraum voneinander durch ein Diaphragma getrennt und in dem Anodenraum wird ein zumindest geringfügig höherer hydrostatischer Druck aufrechterhalten als im Kathodenraum. Dies hat zur Folge, daß der Übertritt der Hydroxylionen vom Kathodenraum in den Anodenraum zurückgedrängt wird, was eine bessere Ausnutzung des Anolyten zuläßt.

Um die Bildung von Ablagerungen und Sedimenten soweit als möglich von vornherein auszuschließen, wird zur Bereitstellung der Elektrolytlösungen vorzugsweise enthärtetes Wasser verwendet.

Die Verwendung des Vorlaufs des Enthärters zur Herstellung der Regenerierlösung vermeidet einen zusätzlichen Schaltzyklus. Im einfachsten Fall kann man mit einer einfachen Einventilsteuerung auskommen. Daneben muß der Vorlauf nicht abgetrennt werden. Durch die Wiederverwendung des Vorlaufs ergibt sich zusätzlich eine Reduzierung des anfallenden Abwassers.

Das erfindungsgemäße Verfahren liefert also bei minimalem Aufwand an zusätzlichen Chemikalien ein umweltverträgliches Abwasser und weist zusätzlich den Vorteil auf, daß lediglich geringstmögliche Mengen an Abwasser dem Abwasserkanal zugeführt werden.

Der alkalische Katholyt wird beispielsweise vollständig für die Neutralisierung des zu behandelnden Badewassers und des verbrauchten Anolyten verwendet, so daß sich überhaupt keine alkalischen Abwasseranteile ergeben. Der Anolyt ist durch den Katholytanteil ebenfalls neutralisiert und durch die Zugabe eines Reduktionsmittels oder allgemein eines inaktivierenden Agens sind auch Reste des Desinfektionsmittels im verbrauchten Anolyt inaktiviert, was insbesondere bei der Verwendung von Chlor als Desinfektionsmittel die Geruchsbelästigung praktisch vollständig vermeidet.

Die Erfindung betrifft weiter eine Vorrichtung zum Desinfizieren von Wasser mit einer Fördervorrichtung zum Fördern des zu behandelnden Wassers, mit einer Mischvorrichtung zum Zugeben eines Desinfektionsmittels zu dem zu behandelnden Wasser, mit einer Elektrolysevorrichtung mit Anoden- und Kathodenraum zur Bereitstellung des Desinfektionsmittels und mit einer Vorrichtung zum Ersetzen von verbrauchtem Elektrolyten.

Die Vorrichtung zur Durchführung des voranstehend beschriebenen erfindungsgemäßen Verfahrens zeichnet sich gegenüber dem Stand der Technik insbesondere dadurch aus, daß die Vorrichtung zum Ersetzen von verbrauchtem Elektrolyten getrennte Zu- und Abflußleitungen für den Anoden- und Kathodenraum umfaßt.

Die Abflußleitung des Anodenraums kann beispielsweise mit einem Reaktor zur Inaktivierung von restlichem Desinfektionsmittel verbunden sein; die Abflußleitung des Kathodenraums beispielsweise mit einer Dosiervorrichtung, die den verbrauchten, alkalischen Katholyten dem Anolyten zu dessen Neutralisierung zudosiert.

Die erfindungsgemäße Vorrichtung erlaubt damit ein umweltfreundliches Desinfizieren von beispielsweise aus Schwimmbecken stammendem Wasser.

Das erfindungsgemäße Verfahren und die erfindungsgemäße Vorrichtung werden vorzugsweise kontinuierlich oder quasi kontinuierlich betrieben.

Bei einer bevorzugten Ausführungsform der Erfindung werden die Abflußleitungen des Anoden- und Kathodenraums so ausgebildet, daß mit dem verbrauchten Elektrolyten gleichzeitig eventuell vorhandene Sedimente, die sich insbesondere in Betriebspausen absetzen können, entfernbar sind.

Anoden- und Kathodenraum werden bevorzugt durch ein Diaphragma getrennt. Hierbei kann dann der Anodenraum mit einem zumindest geringfügig höheren hydrostatischen Druck beaufschlagt sein wie der Kathodenraum, so daß sich der Übertritt der Hydroxylionen aus dem Kathodenraum in den Anodenraum auf ein Minimum beschränken läßt.

Für den Elektrolytaustausch im Anoden- und Kathodenraum werden bevorzugt Dosierpumpen verwendet, die insbesondere ausgangsseitig vom Anoden- und Kathodenraum in den Abflußleitungen angeordnet sind. Hierdurch läßt sich besonders einfach der Ausnutzungsgrad des Anolyten steuern und so eine elektrolytische Zersetzung des Wassers vermeiden.

Alternativ hierzu sind selbstverständlich jede andere Art von Flüssigkeitsfördervorrichtungen einsetzbar, beispielsweise zeitgesteuerte Magnetventile, die mit einem vorgegebenen Gefälle zusammenwirken.

Es hat sich als zweckmäßig erwiesen, als Dosierpumpen sogenannte Elektrolysepumpen zu verwenden, wie diese beispielsweise aus der DE-PS 15 28 921 bekannt sind.

Insbesondere im Zusammenhang mit der Verwendung der Elektrolysepumpen läßt sich die Versorgung der Anoden- und der Kathodenkammer mit unverbrauchtem Elektrolyten besonders vorteilhaft dadurch gestalten, daß ein Vorratsbehälter mit mindestens zwei Kammern vorgesehen ist, wobei die dem Anodenraum zugeordnete erste Kammer eine höhere Flüssigkeitssäule enthält als die dem Kathodenraum zugeordnete zweite. Dadurch wird der gewünschte höhere hydrostatische Druck in dem Anodenraum gegenüber dem Kathodenraum sichergestellt. Außerdem wird dabei ein möglichst gleichmäßiges Druckniveau aufrechterhalten.

Bei einer bevorzugten Ausführungsform der Erfindung ist zusätzlich eine Enthärtervorrichtung vorhanden, die mit dem zu behandelnden Wasser gespeist und deren Ausgang mit dem Eingang des Vorratsbehälters verbunden wird. Hierbei hat es sich dann als zweckmäßig erwiesen, den Vorratsbehälter mit einer dritten Kammer auszustatten, die einen eigenen Abfluß umfaßt und die die Flüssigkeit zur Herstellung einer Regenerierlösung für die Enthärtervorrichtung enthält. Da die dritte Kammer beim normalen Betrieb der Desinfektionsvorrichtung keine Flüssigkeit abgibt und damit den geringsten Verbrauch aufweist, ist es zweckmäßig, den Flüssigkeitseinlaß in den Vorratsbehälter im Bereich der dritten Kammer anzuordnen, so daß nachgelieferte Flüssigkeit stets über die dritte Kammer in die zweite und die erste Kammer geliefert wird. Da der Flüssigkeitsverbrauch der dem Kathodenraum zugeordneten zweiten Kammer der größte ist, wird zweckmäßigerweise der Füllstand dieser Kammer zur Regelung des Zuflusses zum Vorratsbehälter insgesamt genutzt. Damit wird sichergestellt, daß jede der drei Kammern stets mit ihrem maximalen Füllstand gefüllt ist. Die dritte Kammer wird dabei so dimensioniert, daß sie den Vorlauf aus der Enthärtervorrichtung beim Anfahren dieser Vorrichtung aufnehmen kann und für die nächste Bereitung der Regenerierlösung die notwendige Flüssigkeitsmenge bevorratet. Damit muß der Vorlauf aus der Enthärtervorrichtung nicht mehr verworfen werden und die Vorrichtung zur Desinfizierung von Wasser kann angefahren werden, ohne daß zunächst eine gewisse Flüssigkeitsmenge aus der Enthärtervorrichtung als Vorlauf gesondert entnommen werden muß.

Hieraus ergibt sich, daß die drei Kammern in dem Vorratsbehälter zweckmäßigerweise in Form einer mehrstufigen Kaskade anzuordnen sind, wobei vom Flüssigkeitseinlauf gesehen zunächst die dritte Kammer befüllbar ist und erst danach die beiden anderen Kammern befüllbar sind.

Bis jetzt wurde die Ausgestaltung des Reaktors, der zur Inaktivierung von im verbrauchten Anolyten noch vorhandenen Desinfektionsmittel dient, nicht näher ausgeführt. Vorzugsweise ist jedoch diesem Reaktor eine Mischung aus verbrauchtem Katholyt und dem Mittel zur Inaktivierung des Desinfektionsmittels zudosierbar. Hierbei wird man vorzugsweise den Teil des verbrauchten Katholyten, der dem verbrauchten Anolyten zudosiert wird, durch einen Lösebehälter führen, der das Mittel für die Inaktivierung des Desinfektionsmittels enthält. Dem verbrauchten Anolyten wird dabei gleichzeitig eine basische Lösung des Inaktivierungsmittels zugeführt, die eine Anhebung des im Sauren liegenden pH-Wertes der verbrauchten Anolytlösung in den neutralen Bereich bewirkt.

Wegen der aus der verbrauchten Anolytlösung noch frei werdenden geringen Gasmenge empfiehlt es sich, den Reaktor mit einer Entlüftung zur umgebenden Atmosphäre auszurüsten. Um gasförmiges Desinfektionsmittel, wie zum Beispiel Chlor, nicht nach außen dringen zu lassen, ist es sinnvoll, die Entlüftung mit einem Filter auszurüsten, das vorzugsweise Aktivkohle umfaßt.

Alternativ hierzu hat es sich als möglich erwiesen, die Entlüftung als Steigrohr auszubilden, in dem sich das Chlor, das schwerer ist als Luft, im unteren Bereich sammelt. Hierbei ist es zweckmäßig, den Zufluß an verbrauchtem Katholyt mit Inaktivierungsagens oberhalb des Wasserspiegels des Reaktors anzubringen, so daß durch diese leicht basische Lösung ständig gasförmiges Chlor unter Reduktion aufgenommen wird. Ein Abschließen des Steigrohrs mit einem Filter erübrigt sich, da sich nach geraumer Zeit ein stationäres Gleichgewicht einstellt, das heißt das gasförmige Chlor im unteren Teil des Steigrohrs sammelt sich bis auf eine bestimmte Höhe und wird dann in dem Maße, wie es von der Lösung im Reaktor abgesondert wird, von der zufließenden Katholyt-/Reduktionsmittellösung aufgenommen und reduziert.

Will man eine besonders genaue Kontrolle des pH-Wertes des die Desinfektionsvorrichtung verlassenden Abwassers erhalten, so ist es sinnvoll, nach dem Auslaß des Reaktors eine pH-Meßstelle anzuordnen. Dabei kann dann vorgesehen sein, daß von der pH-Meßstelle ein Signal abgeleitet wird, das sich zum Steuern bzw. Regeln der Zudosierung eines weiteren Neutralisationsmittels in den Reaktor eignet. Dieses zusätzliche Neutralisationsmittel kann ein weiterer Anteil des Katholyten sein.

Über die Bereitstellung des frischen Elektrolyten wurde bisher noch nichts weiter ausgeführt. Diese läßt sich besonders einfach dadurch bewerkstelligen, daß die erste Kammer des Vorratsbehälters mit dem Eingang eines Lösebehälters für ein Elektrolytsalz verbunden wird und daß der Ausgang des Lösebehälters mit dem Eingang des Anodenraums verbunden wird. Zwischen dem Pegel in der ersten Kammer des Vorratsbehälters, dem Lösebehälter und dem Anodenraum stellt sich ein hydrostatisches Gleichgewicht ein, das durch die Entnahme der verbrauchten Anolytlösung gestört, jedoch durch einen ständigen Zufluß über den Vorratsbehälter aufrechterhalten wird.

Die zweite Kammer des Vorratsbehälters kann direkt mit dem Eingang des Kathodenraums verbunden werden, da der Enthärter bereits eine Elektrolytlösung mit ausreichender Leitfähigkeit liefert.

Zur Verbesserung der Lecksicherheit kann die gesamte Desinfektionsvorrichtung oder Teile davon - wie z.B. die Elektrolysekammer und/oder die Stelle zur Entnahme des zu behandelnden Wassers und/oder die Vermischvorrichtung, in der dem zu behandelnden Wasser das Desinfektionsmittel beigemischt wird - in einem Behälter angeordnet werden, der mit dem zu behandelnden Wasser gefüllt wird. Ein Lecken einer einzelnen Vorrichtung der Desinfektionsvorrichtung ist insbesondere dann unproblematisch, wenn das Wasser in dem Behälter ständig ausgetauscht wird. Vorzugsweise wird hier der Wasserzufluß in den Behälter durch das im Behälter vorhandene Füllniveau geregelt bzw. gesteuert.

Bei dieser konstruktiven Lösung ist es dann zweckmäßig, das im Behälter vorhandene und zu behandelnde Wasser an einer zum Zufluß zum Behälter entfernten Stelle anzusaugen und mit dem Desinfektionsmittel zu versetzen. Dies gewährleistet eine gute Durchmischung des Wassers im Falle einer Leckage und somit eine größtmögliche Betriebssicherheit.

Bei der weiter oben beschriebenen besonderen Art der Zuführung der Elektrolytlösungen zu Anoden- und Kathodenraum und auch der Bevorratung eines Flüssigkeitsanteils für die Bereitung der Regenerierlösung für den Enthärter ist es nicht erforderlich, die Lösebehälter mit den Vorräten an Elektrolytsalz, Regeneriersalz und Reduktionsmittel gasdicht abschließbar zu gestalten. Im Prinzip können diese Behälter sogar offen bleiben. Eine Kontrolle des Füllstands der Lösebehälter und/oder ein Nachfüllen derselben an bevorratetem Elektrolytsalz, Regeneriersalz und Reduktionsmittel ist deshalb auch bei normalerweise geschlossenen Lösebehältern jederzeit, das heißt auch während des Betriebs der Desinfektionsvorrichtung, ohne Störung des Betriebsablaufs möglich.

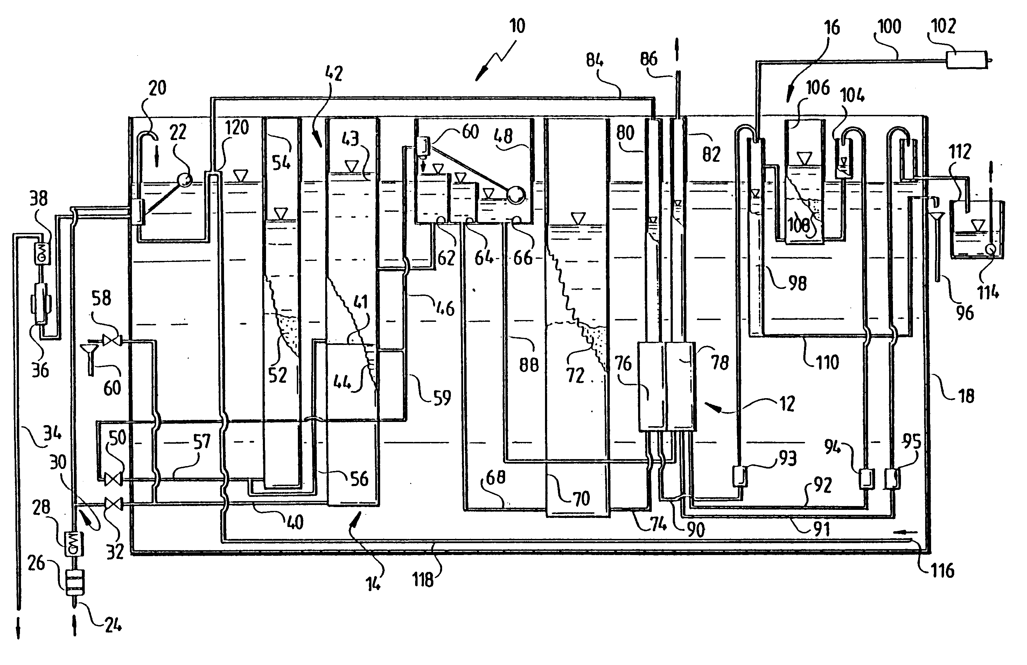

Diese vorgeschlagene Konstruktion ist zugleich einfach und außerdem sehr effektiv, da sie wenig störungsanfällig konstanten hydrostatischen Druck für Anoden- und Kathodenraum garantiert und einen störungsfreien Betrieb der Elektrolysepumpen gewährleistet. Die Elektrolysepumpen werden besonders bevorzugt, weil bei ihnen die Fördermenge direkt mit dem zugeführten Elektrolysestrom einstellbar ist. Deshalb ist der Anolyt- und Katholytaustausch im Anoden- und Kathodenraum direkt koppelbar mit der Menge des bereitzustellenden Desinfektionsmittels. Ein weiterer Vorteil der Kaskadenanordnung in dem Vorratsbehälter ist die leichte Anpaßbarkeit an verschiedene Druckbedingungen in den unterschiedlich zu dimensionierenden Anlagen. Diese und weitere Vorteile der Erfindung werden im folgenden anhand der Zeichnung noch näher erläutert, die ein Übersichtsschema einer besonders bevorzugten Ausführungsform der Erfindung zeigt.

Die insgesamt mit dem Bezugszeichen 10 bezeichnete Desinfektionsvorrichtung setzt sich im wesentlichen aus folgenden drei Einzelvorrichtungen zusammen: der Elektrolysekammer 12, der Enthärtervorrichtung 14 und der Abwasserbehandlungsvorrichtung 16. Die Desinfektionsvorrichtung 10 ist dabei in einem Gesamtbehälter 18 untergebracht, der neben der Desinfektionsvorrichtung das zu behandelnde Wasser enthält. Das zu behandelnde Schwimmbeckenwasser wird über den Zufluß 20, der über einen Schwimmer 22 geregelt wird, zugeführt, welcher ein konstantes Flüssigkeitsniveau in dem Behälter 18 aufrechterhält.

In der Zuflußleitung 24, die vom Schwimmbecken zur Desinfektionsvorrichtung führt, ist zunächst ein Filter 26 und dann ein Rückschlagventil 28 angeordnet. Vor dem eigentlichen Zulauf zum Behälter 18 ist eine Abzweigung 30 vorhanden, von der über ein Ventil 32 Wasser für die Enthärtungsvorrichtung 14 entnommen wird.

Der Rücklauf von der Desinfektionsvorrichtung 10 zum Schwimmbecken wird über die Rücklaufleitung 34 geführt, die neben einem Strömungswächter 36 ein Rückschlagventil 38 umfaßt.

Die Enthärtervorrichtung 14 stellt das für den gesamten Prozeß benötigte enthärtete Wasser zur Verfügung, wobei von der Abzweigung 30 der Zuflußleitung 24 über das Ventil 32 eine Zuleitung 40 in den eigentlichen Enthärtungsbehälter 42 führt. Von dort passiert das zufließende Wasser einen Ionenaustauscher 44, der mittels einer Wand 41 von einer oberen Kammer 43 abgeteilt ist. Vom Ionenaustauscher 44 wird das Wasser über die Verbindungsleitung 46 einem Vorratsbehälter 48 zugeführt, der drei kaskadenförmig angeordnete Kammern umfaßt.

Die Zuführleitung 56 ist so verzweigt, daß sie einem ein Regeneriersalz 52 enthaltenden Lösebehälter 54 im unteren Bereich Wasser zuführen kann, das der Herstellung einer Regeneriersalzlösung für den Ionenaustauscher 44 dient.

Dazu wird der Wasseranteil, der in der oberen Kammer 43 des Enthärtungsbehälters 42 vorhanden ist, und die Flüssigkeitsmenge in einer der drei Kammern des Vorratsbehälters 48 verwendet, die in den unteren Bereich des Lösebehälters 54 über eine Leitung 56 eingeführt werden und dort infolge der geringeren Dichte nach oben steigen. Bei der späteren Entnahme wird im unteren Bereich des Lösebehälters 54 eine gesättigte Regeneriersalzlösung über die Leitung 57 abgezogen und gleichzeitig mit noch in der Kammer 43 vorhandenem enthärtetem Wasser zu der gewünschten Regeneriersalzkonzentration verdünnt und dem Enthärtungsbehälter 42 des Ionenaustauschers 44 über die Leitung 59 zugeführt.

Durch die geeignete Wahl des Volumenverhältnisses der Kammer 43 und des Lösebehälters 54 kann das geeignete Mischungsverhältnis von enthärtetem Wasser und gesättigter Regeneriersalzlösung festgelegt werden.

Bei diesem Regeneriervorgang ist das normalerweise offene Ventil 32 geschlossen, das normalerweise geschlossene Ventil 50 ist geöffnet und ein weiteres Ventil 58, das die Leitung 40 über eine Abzweigung mit dem Abwasserkanal verbindet, ist ebenfalls geöffnet, so daß die verbrauchte Regenerierlösung in einen Abwasserkanal 60 ausfließen kann. Nach beendetem Regeneriervorgang bzw. beim Anfahren der Desinfektionsanlage werden die Ventile 58 und 50 geschlossen und das Ventil 32 geöffnet. Jetzt wird Wasser, das aus dem Schwimmbecken stammt, sowohl über die Zuleitung 20 in den Behälter 18 geführt als auch über die Enthärtervorrichtung 14 dem Vorratsbehälter 48 zugeführt. Dort füllt sich zunächst die obere Kammer 43 im Enthärtungsbehälter 42 - über die Zuleitung 46, die Kammer 62 und ein Regelventil 60 des Vorratsbehälters 48 - mit enthärtetem Wasser (und damit auch der Behälter 54). Da sich der Auslauf des Regelventils 60 oberhalb der dritten Kammer des Vorratsbehälters 48 befindet und diese gegenüber den beiden weiteren Kammern mit einer höheren Trennwand abgetrennt ist, füllt sich diese zunächst bis zum Überlaufen, wodurch der Vorlauf des Enthärters abgetrennt und aus dem normalen Durch- fluß durch die Elektrolysevorrichtung ausgespart wird.

Nach einer Befüllung der dritten Kammer 62 des Vorratsbehälters 48 (und der Kammer 43 des Enthärters 14) füllt sich durch Überlaufen die erste Kammer 64 und danach die niedriger angesiedelte zweite Kammer 66. Jede der Kammern 62, 64, 66 ist mit einem eigenen Ablauf ausgerüstet. Die erste Kammer 64 versorgt dabei über die Leitung 68 einen Lösebehälter 70, der ein Elektrolytsalz 72 beinhaltet. Die Leitung 68 mündet im unteren Bereich des Lösebehälters 70, wodurch das aus der ersten Kammer 64 stammende enthärtete Wasser, das einen geringeren Elektrolytgehalt aufweist als die gesättigte Elektrolytsalzlösung, nach oben steigt und sich mit Elektrolytsalz anreichert. Ebenfalls im unteren Bereich des Lösebehälters 70 endet die Leitung 74, die eine gesättigte Elektrolytsalzlösung der Elektrolysevorrichtung 12 zuführt.

Die Elektrolysevorrichtung 12 setzt sich im wesentlichen aus zwei Elektrolysekammern, der Anoden- und Kathodenkammer 76 bzw. 78, zusammen, wobei die Anodenkammer mit einem Steigrohr 80 und die Kathodenkammer mit einem Steigrohr 82 versehen sind und in eine Gasleitung 84 bzw. 86 münden. Die Leitung 84 transportiert dabei das beispielsweise in der Chlor-Alkali-Elektrolyse produzierte Chlor zur Rückleitung 34, während die Gasleitung 86 den bei der Elektrolyse entstehenden Wasserstoff in die Atmosphäre abgibt.

Erfindungsgemäß ist die Zuleitung 74 mit der Anodenkammer 76 verbunden, während das in der zweiten Kammer 66 befindliche enthärtete Wasser über die Leitung 88 direkt der Kathodenkammer 78 als Katholyt zugeführt wird. Entsprechend den unterschiedlichen Flüssigkeitsniveaus in der ersten und der zweiten Kammer und wegen der unterschiedlichen Dichte der gesättigten Elektrolytlösung gegenüber dem enthärteten Wasser stellen sich unterschiedliche Flüssigkeitspegel im Lösebehälter 70, der Anodenkammer 76 und der Kathodenkammer 78 gegenüber den ersten und zweiten Kammern 64 bzw. 66 ein. Stets ist jedoch ein hydrostatisches Gleichgewicht zwischen den jeweils zugehörigen Kammern aufrechterhalten.

Die Abflußleitungen aus der Anoden- und der Kathodenkammer 90 bzw. 91 und 92 beinhalten sogenannte Elektrolysepumpen 93 bzw. 94 und 95, die über einen Elektrolysestrom eine teilweise Zersetzung der ihnen zugeführten Lösung durchführen und durch die aufsteigenden Gasblasen geringe Flüssigkeitsteile mitreißen und so für einen Flüssigkeitstransport sorgen.

Erfindungsgemäß wird der verbrauchte Anolyt aus der Anodenkammer 76 nicht einfach in einen Abfluß 96 gegeben, sondern zuvor über die Abwasserbehandlungsvorrichtung 16 von aktivem Desinfektionsmittel befreit und neutralisiert.

Hierzu wird der verbrauchte Anolyt über die Dosierpumpe 93 einem Reaktor 98 zugeführt, wobei die Zuleitung 90 üßer das Niveau der in dem Behälter 18 befindlichen Flüssigkeit hinausführt und in das obere Ende des Reaktors 98 mündet. Ebenfalls am oberen Ende des Reaktors 98 ist eine Entlüftung 100 angeordnet, die mit einem Aktivkohlefilter 102 endet. Der verbrauchte Katholyt wird aus der Kathodenkammer 78 einmal durch die Leitung 92 über die Dosierpumpe 94 entfernt, die diesen Teilstrom des verbrauchten Katholyts in einem Vorratsbehälter 104 einspeist. Von dort gelangt dieser Teilstrom des verbrauchten Katholyts in einen Lösebehälter 106, in dem ein Reduktionsmittel 108 vorrätig gehalten wird. Dieses Reduktionsmittel ist beispielsweise Sulfit oder Thiosulfat, das (in ähnlicher Weise wie bei dem Lösebehälter 70 oder dem Lösebehälter 54) von dem verbrauchten Katholyt aufgenommen wird, wobei eine gesättigte Lösung gebildet wird. Diese gesättigte Lösung wird wiederum in den oberen Bereich des Reaktors 98 eingespeist und reduziert das noch im verbrauchten Anolyten vorhandene aktive Desinfektionsmittel, beispielsweise Chlor.

Am Ausgang des Reaktors 98 ist eine Abflußleitung 110 angeordnet, die den Reaktorausgang mit dem Abfluß 96 verbindet. Die Förderleistung der Dosierpumpe 94 läßt sich dabei so einstellen, daß das aus dem Reaktor 98 austretende salzhaltige Abwasser einen neutralen pH-Wert aufweist, so daß hierdurch keine Umweltschädigung zu befürchten ist. Außerdem garantiert diese Dosierleistung der Pumpe 94 bereits eine vollständige Reduktion des noch im verbrauchten Anolyten zunächst vorhandenen aktiven Desinfektionsmittels.

Ein weiterer Teilstrom des verbrauchten Katholyten aus der Kathodenkammer 78 wird über die Leitung 91 und die Dosierpumpe 95 in einen Vorratsbehälter 112 transportiert, aus dem der verbrauchte Katholyt, der durch die Elektrolysereaktion einen basischen pH-Wert erhalten hat, für die Neutralisierung des Schwimmbeckenwassers zur Verfügung steht. Hierzu ist in dem Vorratsbehälter 112 eine weitere Dosierpumpe 114 angeordnet.

Die Lösebehälter 54, 70 und 106 werden vorzugsweise mit einem Überlauf (nicht gezeichnet) ausgerüstet, über den das beim Nachfüllen der Salze verdrängte Wasser abfließen kann, so daß hierdurch die hydrostatischen Gleichgewichtsbedingungen im System nicht dauerhaft gestört werden.

Die Desinfektion des Schwimmbeckenwassers geht nun so vor sich, daß das in dem Behälter 18 vorhandene Wasser über eine Entnahmestelle 116 im Behälter 18 angesaugt wird und über die Leitung 118 zur Rücklaufleitung 34 geführt wird. Die Leitung 118 weist ein T-Stück 120 auf, das eine Verbindung mit der Gasleitung 84 schafft, die das gasförmige Desinfektionsmittel aus der Anodenkammer 76 enthält. Das T-Stück 120 ist bereits für die Vermischung von Wasser und Desinfektionsmittel ausreichend, insbesondere bei der Verwendung von Chlor als Desinfektionsmittel. Vorzugsweise wird das T-Stück 120 im Bereich des Wasserspiegels in dem Behälter 18 angeordnet, so daß im T-Stück 120 im wesentlichen ein Unter- oder Überdruck gegenüber den Flüssigkeitsniveaus in der Vorrichtung herrscht, da sich bei dieser Anordnung die Vermischung von zu behandelndem Wasser und Desinfektionsmittel besonders einfach durchführen läßt.

Aus der vorstehend gegebenen Darstellung einer besonders bevorzugten Ausführungsform der Erfindung wird die Bedeutung des Vorratsbehälters 48 mit den kaskadenförmig angeordneten Kammern 62, 64 und 66 deutlich, die im Zusammenwirken mit den Dosierpumpen 93, 94 und 95 eine kontinuierliche oder quasi kontinuierliche, wartungsfreie Versorgung der Elektrolysevorrichtung 12 erlauben.

In der Gesamtbilanz kommt das erfindungsgemäße Verfahren, abgesehen von dem Inaktivierungsreagens oder Reduktionsmittel 108 sowie dem Regenerierund Elektrolytsalz, das im einfachsten Fall jeweils Kochsalz ist, ohne Zusatz weiterer Chemikalien zur Behandlung des Abwassers aus. Unter Ausnutzung der basischen Eigenschaften des Katholyten, der in einem Teilstrom zur Neutralisierung des verbrauchten Anolyten verwendet wird, wird ein neutrales Abwasser erzeugt, wobei gleichzeitig der Teilstrom des verbrauchten Katholyten zur Lösung des Reduktionsmittels 108 verwendet werden kann. Der restliche Teilstrom des verbrauchten Katholyten wird erfindungsgemäß ebenfalls weiterverwendet, nämlich zur Neutralisierung des Schwimmbeckenwassers, das beispielsweise bei der Verwendung von Chlor als Desinfektionsmittel durch die Desinfektionsreaktion von sich aus einen leicht saueren Charakter erhält. In der Gesamtbilanz wird in aller Regel eine komplette Verwendung des verbrauchten Katholyten möglich sein, so daß von Seiten der Elektrolysezelle lediglich neutrale Abwässer in den Abwasserkanal 96 gegeben werden.

Mit der Verwendung und Rückführung der verbrauchten Katholytlösung wird außerdem das in den Abfluß 96 geleitete Abwasser minimiert.

Durch die Konstanthaltung der Druckniveaus in der Anodenkammer 76 und der Kathodenkammer 78 wird weitgehend eine Verschmutzung des Anolyten durch den basischen Katholyten vermieden, weshalb sich eine bessere Ausnutzung, das heißt längere Verweildauer des Anolyten im Anodenraum, realisieren läßt. Unterstützend wirkt hier, wenn der Katholyt mit einer größeren Durchflußgeschwindigkeit ausgetauscht als der Anolyt.

Außerdem verhindern die erfindungsgemäße Vorrichtung und das erfindungsgemäß damit betriebene Verfahren ein Austreten von gasförmigem Chlor bei der Verwendung einer Chlor-Alkali-Elektrolyse in der Elektrolysezelle 12 und so die Geruchsbelästigung durch in der Atmosphäre vorhandenes Chlor.

## Patentansprüche

1. Verfahren zum Desinfizieren von Wasser, insbesondere von aus Schwimmbecken stammendem Wasser, wobei das zum Desinfizieren benötigte Agens bei Bedarf in einer Elektrolysevorrichtung mit einem Anoden- und einem Kathodenraum gewonnen und dem zu behandelnden Wasser beigemischt wird und wobei dem Anoden- und Kathodenraum jeweils getrennt frischer Elektrolyt als Anolyt bzw. Katholyt direkt zugeführt wird und der verbrauchte Anolyt und der verbrauchte Katholyt dem Anoden- bzw. Kathodenraum getrennt entnommen werden, **dadurch gekennzeichnet,** daß der verbrauchte Anolyt vollständig in den Abwasserkanal geleitet wird, wobei der Anolyt vor Einleitung in den Abwasserkanal unter Verwendung von verbrauchtem Katholyt neutralisiert wird.

2. Verfahren nach Anspruch 1, dadurch gekennzeichnet, daß der verbrauchte Anolyt vor der Einleitung in den Abwasserkanal einem Reaktor zur Inaktivierung des enthaltenen desinfizierenden Agens zugeführt wird.

3. Verfahren nach einem der Ansprüche 1 oder 2, dadurch gekennzeichnet, daß der verbrauchte Katholyt gemeinsam mit dem Reduktionsmittel in den Reaktor eingespeist wird.

4. Verfahren nach Anspruch 3, dadurch gekennzeichnet, daß der verbrauchte Katholyt als Lösungsmittel für das Reduktionsmittel verwendet wird.

5. Verfahren nach einem oder mehreren der Ansprüche 1 bis 4, dadurch gekennzeichnet, daß der pH-Wert des den Reaktor verlassenden inaktivierten Anolyten überwacht, daß bei Bedarf dem Anolyten vor der pH-Meßstelle ein Reagens zur Neutralisierung zugegeben wird, und daß als Reagens zur Neutralisierung ein zusätzlicher Anteil des Katholyten zugegeben wird.

6. Verfahren nach einem oder mehreren der voranstehenden Ansprüche, dadurch gekennzeichnet, daß die frischen Elektrolytlösungen mit im wesentlichen konstantem hydrostatischem Druck in die Elektrolysevorrichtung gefördert werden.

7. Verfahren nach einem oder mehreren der voranstehenden Ansprüche, dadurch gekennzeichnet, daß der verbrauchte Elektrolyt der Elektrolysevorrichtung mittels Dosierpumpen entnommen wird.

8. Verfahren nach einem oder mehreren der voranstehenden Ansprüche, dadurch gekennzeichnet, daß zur Bereitstellung der Elektrolytlösungen enthärtetes Wasser verwendet wird, wobei bei der Herstellung einer Regenerierlösung für den Enthärter der Vorlauf des Enthärters des vorangegangenen Arbeitszyklus' verwendet wird.

9. Vorrichtung zum Desinfizieren von Wasser, insbesondere von aus Schwimmbecken stammendem Wasser und insbesondere nach einem oder mehreren der voranstehenden Ansprüche, mit einer Fördervorrichtung zum Fördern des zu behandelnden Wassers, mit einer Mischvorrichtung zum Zugeben eines Desinfektionsmittels zu dem zu behandelnden Wasser, mit einer Elektrolysevorrichtung mit Anoden- und Kathodenraum zur Bereitstellung des Desinfektionsmittels und mit einer Vorrichtung zum Ersetzen von verbrauchtem Elektrolyten, wobei die Vorrichtung zum Ersetzen von verbrauchtem Elektrolyten getrennte Zu- und Abflußleitungen für den Anoden- und Kathodenraum umfaßt, dadurch gekennzeichnet, daß die Anolytabflußleitung direkt mit einem Abwasserkanal verbindbar ist und daß ein Teilstrom des verbrauchten Katholyten dem verbrauchten Anolyten insbesondere dosierbar zuleitbar ist.

10. Vorrichtung nach Anspruch 9, dadurch gekennzeichnet, daß die Abflußleitung (90) des Anodenraums (76) mit einem Reaktor (98) zur Inaktivierung von restlichem Desinfektionsmittel verbunden ist.

11. Vorrichtung nach Anspruch 9 oder 10, dadurch gekennzeichnet, daß für den Elektrolytaustausch im Anoden- und Kathodenraum ablaufseitig zum Anoden- bzw. Kathodenraum (76; 78) Dosierpumpen (93; 94, 95) vorhanden sind.

12. Vorrichtung nach Anspruch 11, dadurch gekennzeichnet, daß die Dosierpumpen (93, 94, 95) nach dem Elektrolyseprinzip arbeiten.

13. Vorrichtung nach einem oder mehreren der Ansprüche 9 bis 12, dadurch gekennzeichnet, daß zur Versorgung der Anoden- und Kathodenkammer (76, 78) mit unverbrauchtem Elektrolyten ein Vorratsbehälter (48) mit mindestens zwei Kammern (64, 66) vorgesehen ist, wobei die dem Anodenraum zugeordnete erste Kammer (64) eine höhere Flüssigkeitssäule bildet als die dem Kathodenraum (78) zugeordnete zweite.

14. Vorrichtung nach einem oder mehreren der Ansprüche 9 bis 12, dadurch gekennzeichnet, daß eine Enthärtervorrichtung (14) vorgesehen ist, die mit dem zu behandelnden Wasser gespeist wird und deren Ausgang mit dem Eingang der Vorrichtung zum Ersetzen von Elektrolyt (48, 70) verbunden ist.

15. Vorrichtung nach Anspruch 13 oder 14, dadurch gekennzeichnet, daß der Vorratsbehälter (48) eine dritte Kammer (62) mit einem eigenen Abfluß umfaßt, welche Flüssigkeit zur Herstellung einer Regenerierlösung für die Enthärtervorrichtung (14) enthält.

16. Vorrichtung nach Anspruch 15, dadurch gekennzeichnet, daß die dritte Kammer (62) zunächst dem Flüssigkeitseinlaß (60) des Vorratsbehälters (48) angeordnet ist und so dimensioniert ist, daß sie den Vorlauf aus der Enthärtervorrichtung (14) beim Anfahren der Enthärtervorrichtung aufnimmt.

17. Vorrichtung nach Anspruch 16, dadurch gekennzeichnet, daß die drei Kammern (62, 64, 66) in Form einer mehrstufigen Kaskade angeordnet sind, wobei zunächst die dritte Kammer (62) gefüllt wird und erst danach die beiden weiteren Kammern (64, 66) befüllbar sind.

18. Vorrichtung nach Anspruch 17, dadurch gekennzeichnet, daß am Zulauf (60) des Vorratsbehälters (48) ein Ventil angeordnet ist, das über den Flüssigkeitspegel in der Kammer (66) mit dem größten Durchsatz steuerbar ist.

19. Vorrichtung nach einem oder mehreren der voranstehenden Ansprüche 9 bis 18, dadurch gekennzeichnet, daß dem Reaktor (98) eine Mischung aus verbrauchtem Katholyt und einem Mittel (108) zur Inaktivierung des Desinfektionsmittels im verbrauchten Anolyten zudosierbar ist.

20. Vorrichtung nach einem oder mehreren der Ansprüche 13 bis 19, dadurch gekennzeichnet, daß die erste Kammer (64) des Vorratsbehälters (48) mit dem Eingang eines Lösebehälters (70) für ein Elektrolytsalz (72) verbunden ist, und daß der Ausgang des Lösebehälters (70) mit dem Eingang des Anodenraums (76) verbunden ist.

21. Vorrichtung nach einem oder mehreren der Ansprüche 13 bis 20, dadurch gekennzeichnet, daß die zweite Kammer (64) direkt mit dem Eingang des Kathodenraums (78) verbunden ist.

## Claims

1. Process for disinfecting water, in particular water from swimming pools, in which the agent needed for the disinfecting process is produced when required in an electrolysis device with an anode and a cathode space and mixed with the water to be treated, and in which fresh electrolyte is fed separately direct to the anode and to the cathode space respectively in the form of anolyte or catholyte and the spent anolyte and the spent catholyte are taken separately from the anode or cathode space, characterized in that the spent anolyte is directed in its entirety into the sewer, the anolyte being neutralized with the use of spent catholyte before being introduced into the sewer.

2. Process according to Claim 1, characterized in that the spent anolyte is fed to a reactor for the deactivation of the disinfecting agent contained in it prior to its introduction into the sewer.

3. Process according to one of Claims 1 or 2, characterized in that the spent catholyte is fed into the reactor together with the reducing agent.

4. Process according to Claim 3, characterized in that the spent catholyte is used as a solvent for the reducing agent.

5. Process according to one or more of Claims 1 to 4, characterized in that the pH value of the deactivated anolyte leaving the reactor is controlled, in that a neutralizing reagent is added to the anolyte if required before the pH measuring station, and in that an additional portion of the catholyte is added as the neutralizing reagent.

6. Process according to one or more of the preceding Claims, characterized in that the fresh electrolyte solutions are transported into the electrolysis device at a susbstantially constant hydrostatic pressure.

7. Process according to one or more of the preceding Claims, characterized in that the spent electrolyte from the electrolysis device is evacuated by means of metering pumps.

8. Process according to one or more of the preceding Claims, characterized in that softened water is used for the preparation of the electrolyte solutions, the first runnings of the softener from the preceding operating cycle being used for the production of a regenerating solution for the softener.

9. Device for the disinfecting of water, in particular water from swimming pools and especially in accordance with one or more of the preceding Claims, with a transporting device for transporting the water to be treated, with a mixing device for adding a disinfectant to the water to be treated, with an electrolysis device having anode and cathode spaces for preparing the disinfectant, and with a device for replacing spent electrolyte, the device for replacing spent electrolyte having separate inlet and outlet pipes for the anode and cathode spaces, characterized in that the anolyte outlet pipe can be directly connected with a sewer, and that a part of the spent catholyte can be added to the spent anolyte in especially metered doses.

10. Device according to Claim 9, characterized in that the outlet pipe (90) of the anode space (76) is connected to a reactor (98) for the deactivation of any remaining disinfectant.

11. Device according to Claim 9 or 10, characterized in that metering pumps (93, 94, 95) are provided for the exchange of electrolyte in the anode and cathode spaces on the outlet side of the anode and cathode spaces (76; 78).

12. Device according to Claim 11, characterized in that the metering pumps (93, 94, 95) operate according to the principle of electrolysis.

13. Device according to one or more of Claims 9 to 12, characterized in that a storage tank (48) is provided with at least two chambers (64, 66) for the supply of fresh electrolyte to the anode and cathode spaces (76, 78), the first chamber (64) assigned to the anode space forming a higher column of liquid than the second chamber assigned to the cathode space.

14. Device according to one or more of Claims 9 to 12, characterized in that a softening device (14) is provided, which is fed with the water to be treated and whose output is connected with the input of the device for replacing electrolyte.

15. Device according to Claim 13 or 14, characterized in that the storage tank (48) contains a third chamber (62) with its own outlet, which contains liquid for producing a regenerating solution for the softening device (14).

16. Device according to Claim 15, characterized in that the third chamber (62) is initially connected with the liquid inlet (60) of the storage tank (48) and of such dimensions that it receives the first runnings from the softening device (14) when the softening device is started up.

17. Device according to Claim 16, characterized in that the three chambers (62, 64, 66) are arranged in the form of a multi-stage cascade, in which the third chamber (62) is filled first and the two other chambers (64, 66) can only be filled after this.

18. Device according to Claim 17, characterized in that a valve is disposed at the inlet (60) of the storage tank (48) which is controlled by the liquid level in the chamber (66) with the largest throughput.

19. Device according to one or more of the preceding Claims 9 to 18, characterized in that a mixture of spent catholyte and an agent (108) for deactivating the disinfectant in the spent anolyte can be fed to the reactor (98) in metered doses.

20. Device according to one or more of the Claims 13 to 19, characterized in that the first chamber (64) of the storage tank (48) is connected with the input of a dissolving tank (70) for an electrolytic salt (72), and that the output of the dissolving tank (70) is connected with the input of the anode space (76).

21. Device according to one or more of the Claims 13 to 20, characterized in that the second chamber (64) is directly connected with the input of the cathode space (78).

## Revendications

1. Procédé pour désinfecter l'eau, en particulier de l'eau provenant de piscines, selon lequel l'agent nécessaire à la désinfection est obtenu en fonction des besoins dans un dispositif d'électrolyse comportant un espace anodique et un espace cathodique et est ajouté en mélange à l'eau à traiter, et selon lequel de l'électrolyte frais est amené séparément sous forme d'anolyte ou de catholyte à l'espace anodique et l'espace cathodique respectivement et l'anolyte épuisé et le catholyte épuisé sont prélevés séparément de l'espace anodique et de l'espace cathodique respectivement, caractérisé en ce que l'on envoie l'anolyte épuisé complètement dans le canal des eaux d'égout après l'avoir neutralisé à l'aide de catholyte épuisé.

2. Procédé selon la revendication 1, caractérisé en ce que, avant son introduction dans le canal des eaux d'égout, on amène l'anolyte épuisé à un réacteur pour inactiver l'agent désinfectant qu'il contient.

3. Procédé selon la revendication 1 ou 2, caractérisé en ce que l'on introduit le catolyte épuisé ensemble avec un réducteur dans le réacteur.

4. Procédé selon la revendication 3, caractérisé en ce que l'on utilise le catholyte épuisé comme solvant pour le réducteur.

5. Procédé selon une ou plusieurs des revendications 1 à 4, caractérisé en ce que l'on surveille le pH de l'anolyte inactivé sortant du réacteur, que l'on ajoute au besoin, avant le point de mesure du pH, un réactif pour la neutralisation à l'anolyte, et que le réactif ajouté pour la neutralisation est une partie supplémentaire du catholyte.

6. Procédé selon une ou plusieurs des revendications précédentes, caractérisé en ce que l'on transporte les solutions électrolytiques fraîches sous une pression hydrostatique sensiblement constante dans le dispositif d'électrolyse.

7. Procédé selon une ou plusieurs des revendications précédentes, caractérisé en ce que l'on prélève l'électrolyte épuisé du dispositif d'électrolyse au moyen de pompes de dosage.

8. Procédé selon une ou plusieurs des revendications précédentes, caractérisé en ce que l'on utilise de l'eau adoucie pour la préparation des solutions électrolytiques (électrolytes), avec emploi de la charge préliminaire du cycle de travail précédent de l'adoucisseur pour produire une solution de régénération de cet adoucisseur.

9. Installation pour désinfecter l'eau, en particulier de l'eau provenant de piscines, notamment selon une ou plusieurs des revendications précédentes, comprenant un dispositif de transport pour transporter l'eau à traiter, un dispositif mélangeur pour ajouter un désinfectant à l'eau à traiter, un dispositif d'électrolyse comportant un espace anodique et un espace cathodique pour la préparation du désinfectant et un dispositif pour remplacer l'électrolyte épuisé, le dispositif pour remplacer l'électrolyte épuisé comportant des conduites séparées d'alimentation et d'évacuation pour les espaces anodique et cathodique, caractérisée en ce que la conduite d'évacuation de l'anolyte peut être raccordée directement à un canal des eaux d'égout et qu'un courant partiel du catholyte épuisé peut être envoyé, notamment de façon dosable, à l'anolyte épuisé.

10. Installation selon la revendication 9, caractérisée en ce que la conduite d'évacuation (90) de l'espace anodique (76) est raccordée à un réacteur (98) pour inactiver le désinfectant résiduel.

11. Installation selon la revendication 9 ou 10, caractérisée en ce que des pompes de dosage (93; 94, 95) sont prévues du côté de la sortie des espaces anodique et cathodique (76; 78) pour l'échange d'électrolyte dans ces espaces.

12. Installation selon la revendication 11, caractérisée en ce que les pompes de dosage (93, 94, 95) fonctionnent selon le principe de l'électrolyse.

13. Installation selon une ou plusieurs des revendications 9 à 12, caractérisée en ce qu'elle comprend, pour l'alimentation des chambres anodique et cathodique (76, 78) en électrolyte non-épuisé, un réservoir (48) comportant au moins deux chambres (64, 66) dont la première chambre (64), coordonnée à l'espace anodique, forme une colonne de liquide plus haute que la deuxième chambre, coordonnée à l'espace cathodique (78).

14. Installation selon une ou plusieurs des revendications 9 à 12, caractérisée en ce qu'elle comprend un dispositif d'adoucissement (14) qui est alimenté avec l'eau à traiter et dont la sortie est raccordée à l'entrée du dispositif pour remplacer l'électrolyte (48, 70).

15. Installation selon la revendication 13 ou 14, caractérisée en ce que le réservoir (48) comporte une troisième chambre (62) ayant une évacuation individuelle et contenant du liquide pour la production d'une solution de régénération du dispositif d'adoucissement (14).

16. Installation selon la revendication 15, caractérisée en ce que la troisième chambre (62) est coordonnée en premier à l'arrivée de liquide (60) du réservoir (48) et est dimensionnée de manière qu'elle reçoive la charge préliminaire du dispositif d'adoucissement (14) lors de la mise en marche de ce dispositif.

17. Installation selon la revendication 16, caractérisée en ce que les trois chambres (62, 64, 66) sont disposées sous la forme d'une cascade à plusieurs étages, l'agencement étant tel que la troisième chambre (62) est remplie en premier et que les deux autres chambres (64, 66) sont remplissables ensuite seulement.

18. Installation selon la revendication 17, caractérisée en ce qu'elle comprend une soupape montée sur l'arrivée (60) du réservoir (48) et commandée par le niveau du liquide dans la chambre (66) ayant le plus grand débit.

19. Installation selon une ou plusieurs des revendications 9 à 18 précédentes, caractérisée en ce qu'un mélange de catholyte épuisé et d'un produit (108) pour inactiver le désinfectant contenu dans l'anolyte épuisé est ajoutable de façon dosée dans le réacteur (98).

20. Installation selon une ou plusieurs des revendications 13 à 19 précédentes, caractérisée en ce que la première chambre (64) du réservoir (48) est raccordée à l'entrée d'un récipient de lixiviation (70) pour un électrolyte sous forme de sel (72) et que la sortie de ce récipient de lixiviation (70) est raccordée à l'entrée de l'espace anodique (76)

21. Installation selon une ou plusieurs des revendications 13 à 20, caractérisée en ce que la deuxième chambre (64) est raccordée directement à l'entrée de l'espace cathodique (78).
